# EUROPÄISCHE PATENTSCHRIFT

(11) **EP 3 189 289 B1**
(45) Veröffentlichungstag und Bekanntmachung des Hinweises auf die Patenterteilung: **18.07.2018**
(21) Anmeldenummer: 15751010.8
(22) Anmeldetag: 18.08.2015
(51) Int. Cl.: F25B 41/06

(54) **ELEKTROMAGNETISCH BETÄTIGBARES EXPANSIONSVENTIL**
ELECTROMAGNETICALLY ACTUATABLE EXPANSION VALVE
DÉTENDEUR À COMMANDE ÉLECTROMAGNÉTIQUE

(30) Priorität: 01.09.2014 DE 102014217375
(43) Veröffentlichungstag der Anmeldung: 12.07.2017
(73) Patentinhaber: Robert Bosch GmbH, 70442 Stuttgart (DE)
(72) Erfinder: LANDENBERGER, Tobias, 73614 Schorndorf (DE)
(86) Internationale Anmeldenummer: PCT/EP2015/068934
(87) Internationale Veröffentlichungsnummer: WO 2016/034403

(56) Entgegenhaltungen:
- EP-A1- 0 728 971

## Beschreibung

Die Erfindung betrifft ein elektromagnetisch bestätigbares Expansionsventil für ein Kältemittel mit den Merkmalen des Oberbegriffs des Anspruchs 1. Das Expansionsventil findet vorzugsweise in einem Klimakreislauf Einsatz, wobei es insbesondere stromabwärts eines Kondensators und stromaufwärts eines Verdampfers angeordnet wird. Aufgabe eines derartigen Expansionsventils ist es, eine kontrollierte Entspannung eines Kältemittels durchzuführen, das im Klimakreislauf erst verdichtet und dann zur Abkühlung wieder entspannt wird. Bekannte Klimakreise setzen beispielsweise teilhalogenierte Fluor-Kohlenwasserstoffe (HFKW) als Kältemittel ein. Darüber hinaus kann aber auch Kohlendioxid (CO₂) als Kältemittel eingesetzt werden.

### Stand der Technik

Aus der Offenlegungsschrift DE 103 54 229 A1 ist ein Expansionsventil für ein Kältemittel bekannt, das ein Ventilgehäuse mit einer Ventilkammer umfasst, in der ein Drosselkörper axial verstellbar aufgenommen ist. Über die axiale Verstellung des Drosselkörpers kann der Durchfluss durch das Expansionsventil zwischen einem Zufluss und einem Abfluss gedrosselt oder gesperrt werden. Die axiale Verstellung wird über einen Aktuator bewirkt, der entgegen der Federkraft einer Ventilfeder in Abhängigkeit von Betriebsparametern und Umgebungsparametern verstellt werden kann. Als Drosselkörper wird ein hohlzylindrischer Ventilschieber vorgeschlagen, der an seinem Umfang mindestens eine Steuerbohrung aufweist, die mit mindestens einer Zuflussbohrung im Ventilgehäuse zusammenwirkt. Darüber hinaus ist ein Ventilteller vorgesehen, der über einen Ventilschaft mit dem Ventilschieber verbunden und einem Ventilsitz zugewandt ist, der eine Abflussöffnung im Ventilgehäuse umschließt. Die axiale Lage der Steuerbohrung des Ventilschiebers ist dabei derart festgelegt, dass die Zulaufbohrung bereits geschlossen ist, bevor der Ventilteller auf den Ventilsitz aufsetzt.

Das Expansionsventil der DE 103 05 947 A1 stellt demnach eine Kombination aus Schieberventil und Sitzventil dar, wobei lediglich ein Aktuator zur Betätigung des Ventilschiebers und des Ventiltellers benötigt wird. Das Schieberventil ermöglicht eine genaue Regelung des Durchflusses, während das Sitzventil aufgrund seiner hohen Dichtheit eine Absperrfunktion besitzt, die beispielsweise aus Sicherheitsgründen wünschenswert ist. Eine Absperrfunktion ist über ein Schieberventil allein in der Regel nicht realisierbar, da die Führung des Ventilschiebers im Ventilgehäuse leckagebehaftet ist.

Aus der EP 0 728 971 A1 ist ein elektrisch betätigbares Expansionsventil bekannt.

Bei dem bekannten Expansionsventil ist der zum Sitzventil gehörende Ventilteller im Strömungspfad des Kältemittels zwischen Zufluss und Abfluss angeordnet. Das heißt, dass der Ventilteller im Normalbetrieb vom Kältemittel umströmt ist.

Ausgehend von dem vorstehend genannten Stand der Technik liegt der vorliegenden Erfindung die Aufgabe zugrunde, ein elektromagnetisch betätigbares Expansionsventil anzugeben, das strömungstechnisch optimiert ist. Ferner soll ein Expansionsventil angegeben werden, das einfach und kostengünstig herstellbar ist.

Zur Lösung der Aufgabe wird das elektromagnetisch betätigbare Expansionsventil mit den Merkmalen des Anspruchs 1 vorgeschlagen. Vorteilhafte Weiterbildungen der Erfindung sind den Unteransprüchen zu entnehmen.

### Offenbarung der Erfindung

Das vorgeschlagene elektromagnetisch betätigbare Expansionsventil umfasst einen Ventilkörper mit einer Bohrung, in der ein im Wesentlichen hülsenförmiger Ventilschieber zur Verbindung eines Zulaufs mit einem Ablauf axial verschiebbar aufgenommen ist. Erfindungsgemäß wird der Ablauf durch einen Hohlzylinder gebildet, der in die Bohrung des Ventilkörpers eingesetzt ist und an seinem dem Ventilschieber zugewandten Ende einen Ventilsitz ausbildet, der über ein separates Ventilschließelement verschließbar ist. Durch den in den Ventilkörper eingesetzten Hohlzylinder, der eine gewisse axiale Erstreckung besitzt, wird der Ventilsitz nach innen verlagert. Das mit dem

Ventilsitz zusammenwirkende Ventilschließelement kann demnach derart angeordnet werden, dass dieses bei geöffnetem Sitzventil außerhalb des Strömungspfades des Kältemittels zu liegen kommt. Das heißt, dass das Ventilschließelement im Normalbetrieb des Expansionsventils nicht von dem Kältemittel umströmt wird und demzufolge den Kältemittelabfluss nicht behindert.

Bevorzugt besitzt der in den Ventilkörper eingesetzte Hohlzylinder einen Bundbereich, der sich nach radial außen erstreckt und eine kraft-, form- und/oder stoffschlüssige Verbindung des Hohlzylinders mit dem Ventilkörper ermöglicht. Beispielsweise kann der Hohlzylinder über den Bundbereich in den Ventilkörper eingepresst oder eingeschraubt sein. Alternativ oder ergänzend kann der Hohlzylinder im Bundbereich mit dem Ventilkörper verklebt oder verschweißt werden. Der Bundbereich des Hohlzylinders dichtet demnach zugleich die als Ventilkammer dienende Bohrung des Ventilkörpers nach außen hin ab. Die Bohrung des Ventilkörpers kann als einfache Zylinderbohrung ausgeführt werden, welche eine einfache Montage des Expansionsventils ermöglicht.

Weiterhin bevorzugt ist das mit dem Ventilsitz zusammenwirkende Ventilschließelement über den Ventilschieber axial verschiebbar. Es bedarf demnach keiner weiteren Stellmittel als die, die für die axiale Verschiebung des Ventilschiebers sowieso erforderlich sind.

Des Weiteren wird vorgeschlagen, dass das Ventilschließelement im Ventilschieber aufgenommen ist. Da der Ventilschieber im Wesentlichen hülsenförmig ausgeführt ist, kann der von dem Ventilschieber umschlossene Hohlraum zur Aufnahme des Ventilschließelements genutzt werden. Dadurch wird nicht nur eine kompaktbauende Anordnung erzielt, sondern vorzugsweise ferner eine Anordnung, bei welcher das Ventilschließelement außerhalb des Strömungspfads des Kältemittels zu liegen kommt, wenn das Sitzventil geöffnet ist. Denn vorzugsweise erfolgt die Anordnung des Ventilschließelements innerhalb des im Wesentlichen hülsenförmigen Ventilschiebers jenseits einer am oder im Ventilschieber ausgebildeten Steuerkante oder Steueröffnung.

Vorteilhafterweise ist das Ventilschließelement kugelförmig ausgeführt. Ein kugelförmiges Ventilschließelement wirkt selbstzentrierend mit dem Ventilsitz zusammen, so dass eine hohe Dichtheit des Sitzventils gewährleistet ist. Der Ventilsitz besitzt vorzugsweise eine Kegelform, die dadurch erreicht werden kann, dass der in den Ventilkörper eingesetzte Hohlzylinder an seinem Innenumfang mit einer Fase versehen ist.

In Weiterbildung der Erfindung wird vorgeschlagen, das das kugelförmige Ventilschließelement von einem Käfig umgeben ist, der von der Federkraft einer Feder in Richtung einer Bodenfläche des Ventilschiebers beaufschlagt ist. Der Käfig stellt sicher, dass das Sitzventil offen bleibt, solange sich das Expansionsventil im Regelbetrieb befindet.

Die Federkraft der Feder, die den Käfig in Richtung der Bodenfläche des Ventilschiebers beaufschlagt, ist bevorzugt der Magnetkraft eines Elektromagneten entgegengesetzt, welcher der Betätigung des Expansionsventils dient. Dies ist insbesondere dann von Vorteil, wenn es sich bei dem Expansionsventil um ein stromlos offenes Ventil handelt. Denn dann kann die Feder zugleich die Funktion einer Ventilfeder übernehmen, deren Federkraft das Ventil geöffnet hält.

Der zur Betätigung des Expansionsventils vorgeschlagene Elektromagnet wirkt vorzugsweise mit einem hubbeweglichen Anker und einem mit dem Anker verbundenen Ankerbolzen zusammen. Über die Bestromung des Elektromagneten kann die Hubbewegung des Ankers und damit des Ankerbolzens derart beeinflusst werden, dass hierüber der Kältemitteldurchfluss steuerbar ist. Denn vorteilhafterweise wird die Hubbewegung des Ankers über den Ankerbolzen unmittelbar auf den Ventilschieber übertragen.

Als weiterbildende Maßnahme wird daher vorgeschlagen, dass der Ankerbolzen zur mechanischen Kopplung mit dem Ventilschieber durch eine zentrale Öffnung des Ventilkörpers geführt ist. Bevorzugt liegt der Ankerbolzen unmittelbar an einem Boden des im Wesentlichen hülsenförmigen Ventilschiebers an.

Bevorzugt weist der im Wesentlichen hülsenförmige Ventilschieber mindestens eine mantelseitige Durchbrechung auf, die zur Verbindung des Zulaufs mit dem Ablauf in Überdeckung mit einer im Ventilkörper ausgebildeten Radialbohrung und/oder Ringnut bringbar ist. Die mindestens eine mantelseitige Durchbrechung dient demnach als Steueröffnung, über deren freigegebenen Querschnitt der Kältemitteldurchfluss steuerbar ist. Die im Ventilkörper vorgesehene Radialbohrung und/oder Ringnut, die als Zulauf dient, definiert dabei eine Steuerkante, die mit der Steueröffnung zusammenwirkt.

Gemäß einer bevorzugten Ausführungsform der Erfindung ist das Expansionsventil stromlos offen. Das heißt, dass die Federkraft einer Feder das Ventil in unbestromtem Zustand geöffnet hält. Hierbei kann es sich insbesondere um die Feder handeln, die - sofern vorgesehen - zugleich den Käfig in Richtung der Bodenfläche des Ventilschiebers axial vorspannt.

Des Weiteren bevorzugt ist über das Ventilschließelement der Ablauf nur verschließbar, wenn zugleich die Verbindung des Zulaufs mit dem Ablauf durch den Ventilschieber unterbrochen ist. Dadurch ist sichergestellt, dass die Funktion des Schieberventils über den gesamten Regelbereich erhalten bleibt.

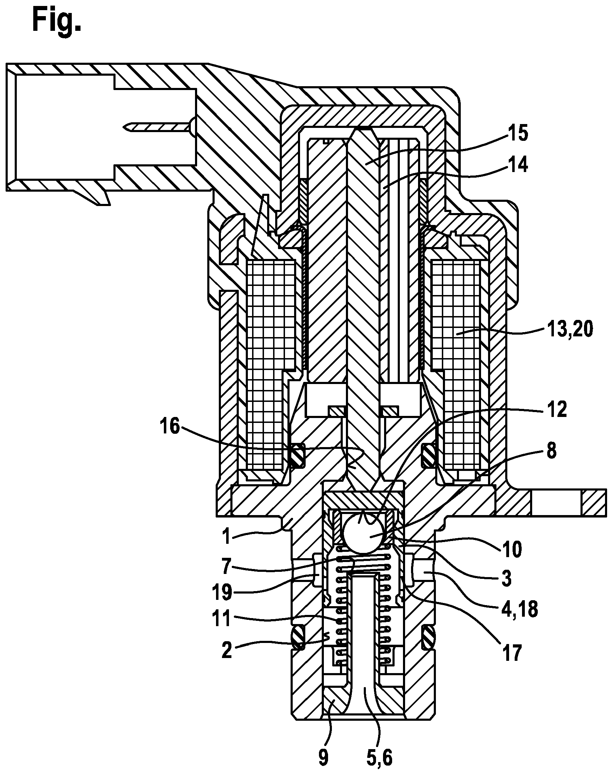

Eine bevorzugte Ausführungsform der Erfindung wird nachfolgend anhand der beigefügten Zeichnung näher erläutert. Diese zeigt einen schematischen Längsschnitt durch ein erfindungsgemäßes Expansionsventil gemäß einer bevorzugten Ausführungsform.

### Ausführliche Beschreibung der Zeichnung

Das in der Figur schematisch dargestellte Expansionsventil umfasst einen Ventilkörper 1 mit einer Bohrung 2, in welcher ein Ventilschieber 3 axial verschiebbar aufgenommen ist. Der Ventilschieber 3 ist im Wesentlichen hülsenförmig ausgebildet und weist mantelseitige Durchbrechungen 17 auf, die in Überdeckung mit einer Ringnut 19 bringbar sind, in welche als Zulauf 4 dienende Radialbohrungen 18 münden. In Abhängigkeit von der axialen Lage der Durchbrechungen 17 des Ventilschiebers 3 in Bezug auf die Ringnut 19 des Ventilkörpers 1 ist demnach ein den Durchfluss bestimmender Strömungsquerschnitt freigebbar, der über eine axiale Verschiebung des Ventilschiebers 3 veränderbar ist.

Um ferner eine Absperrfunktion zu realisieren, weist das Expansionsventil darüber hinaus ein mit einem Ventilsitz 7 zusammenwirkendes kugelförmiges Ventilschließelement 8 auf. Das dargestellte Expansionsventil ist somit als Schiebersitzventil ausgebildet. Das heißt, dass es die Funktionen eines Schieberventils und eines Sitzventils vereint. Der Ventilsitz 7 ist an einem Hohlzylinder 6 ausgebildet, der in den Ventilkörper 1 eingesetzt und mit diesem über einen Bundbereich 9 kraftschlüssig verbunden ist. Der Hohlzylinder 6 dient zugleich als Ablauf 5. Aufgrund der axialen Erstreckung des Hohlzylinders in den Ventilkörper 1 hinein kommt der Ventilsitz 7 etwa mittig in Bezug auf die axiale Erstreckung der Bohrung 2 zu liegen. Vorliegend befindet sich der Ventilsitz 7 auf der Höhe der Mittelachse der als Zulauf 4 dienenden Radialbohrungen 18. Das kugelförmige Ventilschließelement 8 wird von einem Käfig 10 in Anlage mit dem Ventilschieber 3 gehalten. Hierzu ist der Käfig 10 mittels der Federkraft einer Feder 11 gegenüber einer Bodenfläche 12 des Ventilschiebers 3 axial vorgespannt. Die Feder 11 dient zugleich als Ventilfeder, deren Federkraft das Expansionsventil in unbestromtem Zustand offen hält.

Durch die Anordnung des Ventilschließelements 8 innerhalb des Ventilschiebers 3, kommt dieses außerhalb des Strömungspfads des Kühlmittels zu liegen. Die Durchströmung des Expansionsventils wird auf diese Weise optimiert.

Ferner kommen sowohl die Vorteile eines Schieberventils als auch die Vorteile eines Sitzventils zum Tragen, die insbesondere darin bestehen, dass das Schieberventil eine genaue Regelung des Durchflusses und das Sitzventil eine vollständige Absperrung ermöglicht.

Die Ausbildung als Schiebersitzventil erfordert dennoch nur ein Betätigungsmittel. Als solches dient vorliegend ein Elektromagnet 13. Der Elektromagnet 13 umfasst eine ringförmige Spule 20, die einen hubbeweglichen Anker 14 bereichsweise umgibt. Der Anker 14 ist mit einem Ankerbolzen 15 verbunden, welcher der Übertragung des Hubs des Ankers 14 auf den Ventilschieber 3 dient. Der Ankerbolzen 15 ist hierzu durch eine Öffnung 16 des Ventilkörpers 1 geführt, so dass er stirnseitig am Ventilschieber 3 anliegt. Wird die Spule 20 des Elektromagneten 13 bestromt, baut sich ein Magnetfeld auf, dessen Magnetkraft den Anker 14 nach unten zieht. Dabei führt der Anker 14 den Ankerbolzen 15 mit, der wiederum eine axiale Verstellung des Ventilschiebers 3 bewirkt. Dabei ändert sich der Überdeckungsbereich der mantelseitigen Durchbrechungen 17 des Ventilschiebers 3 mit der Ringnut 19 des Ventilkörpers 1, so dass der Durchfluss verringert wird. Wird die Ringnut 19 vollständig überfahren, wird die Verbindung des Zulaufs 4 mit dem Ablauf 5 durch den Ventilschieber 3 unterbrochen. Allerdings dichtet der Ventilschieber 3 den verbleibenden Ringspalt zwischen sich und dem Ventilkörper 1 nicht vollständig ab, so dass im Wege der Leckage weiterhin Kältemittel in das Ventil eindringen kann. In dieser Phase gelangt nun das Sitzventil zum Einsatz, da mit fortschreitendem Hub des Ventilschiebers 3 dieser das kugelförmige Ventilschließelement 8 in den Ventilsitz 7 drückt. Die hohe Dichtheit des Sitzventils gewährleistet, dass kein Kältemittel mehr über den Ablauf 5 nach außen gelangt.

## Patentansprüche

1. Elektromagnetisch betätigbares Expansionsventil für ein Kältemittel, umfassend einen Zulauf (4), einen Ablauf (5) und einen Ventilkörper (1) mit einer Bohrung (2), in der ein im Wesentlichen hülsenförmiger Ventilschieber (3) zur Verbindung des Zulaufs (4) mit dem Ablauf (5) axial verschiebbar aufgenommen ist,
**dadurch gekennzeichnet, dass** der Ablauf (5) durch einen Hohlzylinder (6) gebildet wird, der in die Bohrung (2) eingesetzt ist und an seinem dem Ventilschieber (3) zugewandten Ende einen Ventilsitz (7) ausbildet, der über ein separates Ventilschließelement (8) verschließbar ist.

2. Expansionsventil nach Anspruch 1,
**dadurch gekennzeichnet, dass** der Hohlzylinder (6) einen Bundbereich (9) besitzt, der sich nach radial außen erstreckt und eine kraft-, form- und/oder stoffschlüssige Verbindung des Hohlzylinders (6) mit dem Ventilkörper (1) ermöglicht.

3. Expansionsventil nach Anspruch 1 oder 2,
**dadurch gekennzeichnet, dass** das Ventilschließelement (8) über den Ventilschieber (3) axial verschiebbar ist.

4. Expansionsventil nach einem der vorhergehenden Ansprüche,
**dadurch gekennzeichnet, dass** das Ventilschließelement (8) im Ventilschieber (3) aufgenommen ist.

5. Expansionsventil nach einem der vorhergehenden Ansprüche,
**dadurch gekennzeichnet, dass** das Ventilschließelement (8) kugelförmig ausgeführt ist, wobei vorzugsweise das kugelförmige Ventilschließelement (8) von einem Käfig (10) umgeben ist, der von der Federkraft einer Feder (11) in Richtung einer Bodenfläche (12) des Ventilschiebers (3) beaufschlagt ist.

6. Expansionsventil nach Anspruch 5,
**dadurch gekennzeichnet, dass** die Federkraft der Feder (11) der Magnetkraft eines Elektromagneten (13) entgegengesetzt ist, welcher der Betätigung des Expansionsventils dient, wobei vorzugsweise der Elektromagnet (13) mit einem hubbeweglichen Anker (14) und einem mit dem Anker (14) verbundenen Ankerbolzen (15) zusammenwirkt.

7. Expansionsventil nach Anspruch 6,
**dadurch gekennzeichnet, dass** der Ankerbolzen (15) zur mechanischen Kopplung mit dem Ventilschieber (3) durch eine zentrale Öffnung (16) des Ventilkörpers (1) geführt ist.

8. Expansionsventil nach einem der vorhergehenden Ansprüche,
**dadurch gekennzeichnet, dass** der im Wesentlichen hülsenförmige Ventilschieber (3) mindestens eine mantelseitige Durchbrechung (17) aufweist, die zur Verbindung des Zulaufs (4) mit dem Ablauf (5) in Überdeckung mit einer im Ventilkörper (1) ausgebildeten Radialbohrung (18) und/oder Ringnut (19) bringbar ist.

9. Expansionsventil nach einem der vorhergehenden Ansprüche,
**dadurch gekennzeichnet, dass** das Expansionsventil stromlos offen ist, wobei vorzugsweise die Federkraft der Feder (11) das Expansionsventil geöffnet hält.

10. Expansionsventil nach einem der vorhergehenden Ansprüche,
**dadurch gekennzeichnet, dass** über das Ventilschließelement (8) der Ablauf (5) nur verschließbar ist, wenn zugleich die Verbindung des Zulaufs (4) mit dem Ablauf (5) durch den Ventilschieber (3) unterbrochen ist.

## Claims

1. Electromagnetically actuatable expansion valve for a refrigerant, comprising an inlet (4), an outlet (5) and a valve body (1) with a bore (2), in which an essentially sleeve-like valve slide (3) is accommodated in an axially displaceable manner in order to connect the inlet (4) to the outlet (5),
**characterized in that** the outlet (5) is formed by a hollow cylinder (6), which is inserted into the bore (2) and, at its end which is directed toward the valve slide (3), forms a valve seat (7), which can be closed via a separate valve-closing element (8).

2. Expansion valve according to Claim 1,
**characterized in that** the hollow cylinder (6) has a collar region (9), which extends radially outward and allows a force-fitting, form-fitting and/or integral connection between the hollow cylinder (6) and the valve body (1).

3. Expansion valve according to Claim 1 or 2,
**characterized in that** the valve-closing element (8) can be displaced axially via the valve slide (3).

4. Expansion valve according to one of the preceding claims,
**characterized in that** the valve-closing element (8) is accommodated in the valve slide (3).

5. Expansion valve according to one of the preceding claims,
**characterized in that** the valve-closing element (8) is of spherical design, wherein preferably the spherical valve closing element (8) is surrounded by a cage (10), which is forced by the force of a spring (11) in the direction of a base surface (12) of the valve slide (3).

6. Expansion valve according to Claim 5,
**characterized in that** the force of the spring (11) opposes the magnetic force of an electromagnet (13), which serves for actuating the expansion valve, wherein preferably the electromagnet (13) interacts with a displaceable armature (14) and an armature bolt (15), which is connected to the armature (14).

7. Expansion valve according to Claim 6,
**characterized in that**, for mechanical coupling to the slide valve (3), the armature bolt (15) is guided through a central opening (16) of the valve body (1).

8. Expansion valve according to one of the preceding claims,
**characterized in that** the essentially sleeve-like valve slide (3) has at least one lateral-surface through-passage (17) which, in order to connect the inlet (4) to the outlet (5), can be made to coincide with an annular groove (19) and/or radial bore (18) formed in the valve body (1).

9. Expansion valve according to one of the preceding claims,
**characterized in that** the expansion valve is normally open, wherein preferably the force of the spring (11) keeps the expansion valve open.

10. Expansion valve according to one of the preceding claims,
**characterized in that** the outlet (5) can only be closed via the valve-closing element (8) when, at the same time, the connection between the inlet (4) and the outlet (5) has been interrupted by the valve slide (3).

## Revendications

1. Soupape de détente à commande électromagnétique pour un fluide frigorigène, comprenant une alimentation (4), une sortie (5) et un corps de soupape (1) avec un alésage (2) dans lequel est reçu de manière déplaçable axialement un coulisseau de soupape (3) essentiellement en forme de douille pour relier l'alimentation (4) à la sortie (5),
**caractérisée en ce que** la sortie (5) est formée par un cylindre creux (6) qui est inséré dans l'alésage (2) et qui constitue au niveau de son extrémité tournée vers le coulisseau de soupape (3) un siège de soupape (7) qui peut être fermé par le biais d'un élément de fermeture de soupape séparé (8).

2. Soupape de détente selon la revendication 1,
**caractérisée en ce que** le cylindre creux (6) possède une région d'épaulement (9) qui s'étend radialement vers l'extérieur et qui permet une liaison par engagement par force, par correspondance de formes et/ou par liaison de matière du cylindre creux (6) avec le corps de soupape (1).

3. Soupape de détente selon la revendication 1 ou 2, **caractérisée en ce que** l'élément de fermeture de soupape (8) peut être déplacé axialement par le biais du coulisseau de soupape (3).

4. Soupape de détente selon l'une quelconque des revendications précédentes,
**caractérisée en ce que** l'élément de fermeture de soupape (8) est reçu dans le coulisseau de soupape (3) .

5. Soupape de détente selon l'une quelconque des revendications précédentes,
**caractérisée en ce que** l'élément de fermeture de soupape (8) est réalisé sous forme sphérique, l'élément de fermeture de soupape de forme sphérique (8) étant de préférence entouré par une cage (10) qui est sollicitée par la force de ressort d'un ressort (11) dans la direction d'une surface de fond (12) du coulisseau de soupape (3).

6. Soupape de détente selon la revendication 5,
**caractérisée en ce que** la force de ressort du ressort (11) est opposée à la force magnétique d'un électroaimant (13) qui sert à actionner la soupape de détente, l'électroaimant (13) coopérant de préférence avec un induit à course de déplacement (14) et avec un boulon d'induit (15) connecté à l'induit (14).

7. Soupape de détente selon la revendication 6,
**caractérisée en ce que** le boulon d'induit (15), pour l'accouplement mécanique au coulisseau de soupape (3), est guidé à travers une ouverture centrale (16) du corps de soupape (1).

8. Soupape de détente selon l'une quelconque des revendications précédentes,
**caractérisée en ce que** le coulisseau de soupape (3) essentiellement en forme de douille présente au moins un orifice du côté de l'enveloppe (17) qui, pour la connexion de l'alimentation (4) à la sortie (5), peut être amené en coïncidence avec un alésage radial (18) et/ou une rainure annulaire (19) réalisé(e) dans le corps de soupape (1).

9. Soupape de détente selon l'une quelconque des revendications précédentes,
**caractérisée en ce que** la soupape de détente est ouverte lorsqu'elle n'est pas alimentée en courant, la force de ressort du ressort (11) maintenant de préférence ouverte la soupape de détente.

10. Soupape de détente selon l'une quelconque des revendications précédentes,
**caractérisée en ce que** la sortie (5) ne peut être fermée par le biais de l'élément de fermeture de soupape (8) que lorsque la connexion de l'alimentation (4) à la sortie (5) est simultanément interrompue par le coulisseau de soupape (3).
